# EUROPÄISCHE PATENTSCHRIFT

(11) **EP 3 713 268 B1**
(45) Veröffentlichungstag und Bekanntmachung des Hinweises auf die Patenterteilung: **13.03.2024**
(21) Anmeldenummer: 20020130.9
(22) Anmeldetag: 23.03.2020
(51) Int. Cl.: H04W 12/00, H04W 76/10, H04W 4/60, H04W 4/70, H04W 12/30, H04W 12/40, H04W 76/15

(54) **VERFAHREN ZUM AUFBAU EINER DATENVERBINDUNG, VERFAHREN ZUM BEREITSTELLEN VON VERBINDUNGSPARAMETERN, SOWIE TEILNEHMERIDENTITÄTSMODUL**
METHOD FOR ESTABLISHING A DATA CONNECTION, METHOD FOR PROVIDING CONNECTION PARAMETERS, AND SUBSCRIBER IDENTITY MODULE
PROCÉDÉ D'ÉTABLISSEMENT D'UNE CONNEXION DE DONNÉES, PROCÉDÉ DE FOURNITURE DES PARAMÈTRES DE CONNEXION AINSI QUE MODULE D'IDENTITÉ DU PARTICIPANT

(30) Priorität: 22.03.2019 DE 102019002050
(43) Veröffentlichungstag der Anmeldung: 23.09.2020
(73) Patentinhaber: Giesecke+Devrient Mobile Security Germany GmbH, 81677 München (DE)
(72) Erfinder: Schnellinger, Michael, 84032 Landshut (DE)
(74) Vertreter: Giesecke+Devrient IP

(56) Entgegenhaltungen:
- DE-A1-102015 003 977
- DE-A1-102016 003 230
- DE-A1-102017 002 795

## Beschreibung

### TECHNISCHES GEBIET DER ERFINDUNG

Die Erfindung bezieht sich auf ein Verfahren zum Aufbau einer Datenverbindung über ein Kommunikationsnetz zwischen einem Teilnehmeridentitätsmodul, bevorzugt einer embedded UICC, und einem Server, wobei das Teilnehmeridentitätsmodul die Datenverbindung mittels eines Geräts aufbaut, ein Verfahren zum Bereitstellen von Verbindungsparametern, ein entsprechendes Teilnehmeridentitätsmodul und ein Computerprogramm-Produkt.

Zur Nutzung von Diensten eines Kommunikationsnetzes enthält ein Gerät, beispielsweise ein Mobilfunktelefon oder ein Maschine-zu-Maschine-Gerät, englisch Machine-to-Machine-Device, kurz M2M-Gerät, ein Teilnehmeridentitätsmodul. In dem Teilnehmeridentitätsmodul, nachfolgend auch als eUICC (=embedded Universal Integrated Chip Card) bezeichnet, sind Teilnehmeridentitätsdaten abgelegt, um einen Teilnehmer am Kommunikationsnetz, beispielsweise einem Mobilfunknetz, zu identifizieren und zu authentisieren. Damit ist es einem Betreiber des Kommunikationsnetzwerks möglich, die Nutzung eines angebotenen Dienstes, jedem Teilnehmer im Kommunikationsnetzwerk eindeutig zuzuordnen. Weiterhin ist es dem Betreiber möglich, einen Netzzugang, also das Einbuchen in das Kommunikationsnetz, zu ermöglichen, sobald eine Authentisierung des Teilnehmers stattgefunden hat. Er kann zudem den Netzzugang verweigern, falls eine Authentisierung des Teilnehmers nicht möglich ist.

### TECHNISCHER HINTERGRUND

Ein Teilnehmeridentitätsmodul ist dazu eingerichtet, eine Datenverbindung zu einem Server über das Kommunikationsnetz aufzubauen, um Dienste des Servers zu nutzen und mit diesem Server Daten auszutauschen. Beim Aufbau einer derartigen Datenverbindung von einem Teilnehmeridentitätsmodul zu einem Server werden Verbindungsparameter, beispielsweise eine eindeutige Server-Adresse und das zu verwendende Datenverbindungs-Protokoll benötigt. Zum Aufbau, Abbau und Betrieb einer Datenverbindung wird beispielsweise eine Karten-Applikations-Bibliothek bzw. ein Karten-Applikations-Werkzeugkasten, englisch Card Applikation Toolkit, kurz CAT, des Teilnehmeridentitätsmoduls gemäß dem ETSI Standard TS 102 223 verwendet wird.

Diese notwendigen Verbindungsparameter werden bislang beispielsweise als Push-Short-Message-Service, SMS, im Vorfeld der aufzubauenden Datenverbindung vom Server an das Teilnehmeridentitätsmodul übermittelt. Dies wird auch als PUSH Request bezeichnet. Alternativ werden diese Verbindungsparameter bereits bei der Herstellung/Auslieferung auf das Teilnehmeridentitätsmodul übertragen, nachfolgend auch als (Vor-)Personalisierung des Teilnehmeridentitätsmoduls bezeichnet. Bei einem teilnehmeridentitätsmodul-initiierten Verbindungsaufbau, beispielsweise einem PULL-Request, können diese Verbindungsparameter zum Aufbau der Datenverbindung verwendet werden.

Damit das Teilnehmeridentitätsmodul eine Datenverbindung zu einem Server aufbauen kann, ist es betriebsbereit in einem Gerät eingebracht. Die Kommunikation zwischen Teilnehmeridentitätsmodul und Gerät basiert auf einem ersten Verbindungsprotokoll während die Kommunikation zwischen Gerät und Server möglicherweise auf einem vom ersten Verbindungsprotokoll verschiedenen zweiten Verbindungsprotokoll basiert. Das Gerät setzt die Daten des Teilnehmeridentitätsmoduls vom ersten Verbindungsprotokoll in das zweite Verbindungsprotokoll um, beispielsweise durch Hinzufügen eines entsprechenden ProtokollKopfes ("Header") des zweiten Verbindungsprotokolls.

Das Gerät kann zusätzlich dazu eingerichtet sein, eigenständig eine Datenverbindung zu einem räumlich entfernten Server aufzubauen, um ebenfalls dessen Dienste zu nutzen und mit diesem Server Daten auszutauschen.

Diese Konstellation aus Server(n), Gerät und Teilnehmeridentitätsmodul birgt eine Reihe von technischen Schwierigkeiten.

Einerseits können die in das Teilnehmeridentitätsmodul im Vorfeld eingebrachten Verbindungsparameter zum Zeitpunkt des Verbindungsaufbaus veraltet sein. Beispielsweise könnte eine veraltete Verbindungsprotokollversion abgelegt sein oder eine Serveradresse ist mittlerweile nicht mehr korrekt. Eine Datenverbindung mit diesen veralteten Verbindungsparametern schlägt dann fehl, es sind zeitaufwendige Korrekturen der Verbindungsparameter notwendig, beispielsweise muss eine Anfrage der korrekten Verbindungsparameter vorgenommen werden.

Andererseits besteht die Möglichkeit, dass unabhängig voneinander sowohl das Gerät als auch das Teilnehmeridentitätsmodul eine Datenverbindung zu einem (oder verschiedenen) Server(n) wünschen und dabei unterschiedliche Verbindungsparameter verwenden (wollen). Die Verbindungsanfrage des Teilnehmeridentitätsmoduls wird dabei über das Gerät erfolgen. Das zur Kommunikation verwendete Kommunikationsnetz kommuniziert für beide Datenverbindungen nur mit dem Gerät. Unterschiedliche Verbindungsparameter bei (zeitlich parallelen) zwei verschiedenen Datenverbindungen von dem gleichen Gerät werden vom Kommunikationsnetz möglicherweise als ein Fehler oder sogar als eine Alarm-Situation bewertet. Denn unterschiedliche Verbindungsparameter könnten einen Versuch des Geräts darstellen, Dienste des Kommunikationsnetzes zu nutzen, für die das Gerät nicht autorisiert ist. In der Folge würden Anfragen für eine Datenverbindung abgelehnt werden und bereits bestehende Datenverbindungen würden prompt unterbrochen werden. Darüber hinaus kann es auch zu einer Zwangstrennung des Geräts vom Kommunikationsnetz kommen. Das Gerät und auch das Teilnehmeridentitätsmodul müssten sich wieder neu am Kommunikationsnetz identifizieren und authentifizieren. In dieser Zeit wäre eine Nutzung von Diensten nicht möglich.

Zudem besteht die Möglichkeit, dass das Teilnehmeridentitätsmodul eine Datenverbindung zu einem ersten Server wünscht während das Gerät zeitgleich eine Datenverbindung zu einem zweiten Server wünscht. Es kann aber im Kommunikationsnetz untersagt sein, dass ein Gerät unterschiedliche Datenverbindungen zu verschiedenen Servern gleichzeitig aufbauen bzw. betreiben darf. Hierzu schlägt die DE 10 2017 002 795 A1 ein Verfahren zur Kommunikation in einem Mobilfunknetz mittels eines M2M-Geräts vor. Damit der Betrieb des M2M Geräts nicht gestört wird, wird vorgeschlagen, die Fähigkeit des Kommunikationsnetzes zu erfragen und falls das Kommunikationsnetz nur Datenverbindungen zu einem Server zulässt, wird eine zweite Datenverbindung zu einem zweiten Server verhindert.

DE 102016003230 A1 offenbart eine in ein Kraftfahrzeug eingebaute Mobilfunkeinrichtung mit einer fest eingebauten UICC, die erst nach Fertigstellung des Fahrzeuges konfiguriert werden kann. Die Konfiguration erfolgt, indem Konfigurationsdaten in die UICC gebracht werden. Mittels der Konfigurationsdaten kann eine Mobilfunkverbindung hergestellt werden. Die Konfigurationsdaten werden von einem Server oder über eine fahrzeuginterne Funkverbindung von einem mobilen Endgerät empfangen. Die Konfigurationsdaten können rekonfiguriert werden. Besteht eine Mobilfunkverbindung, kann diese genutzt werden, um über die Mobilfunkeinrichtung weitere Funktionalitäten des Fahrzeuges zu steuern.

### ZUSAMMENFASSUNG DER ERFINDUNG

Der Erfindung liegt die Aufgabe zu Grunde, Verfahren und Module zu schaffen, die einen möglichst störungsarmen bzw. störungsfreien Betrieb eines Geräts mit einer eUICC erlaubt, wobei ein Aufbau einer Datenverbindung von der eUICC mit einem Server einen Verbindungsaufbau bzw. eine bereits bestehende Datenverbindung des Geräts mit dem oder einem anderen Server nicht stört und der Aufbau der Datenverbindung nicht unnötig verzögert wird.

Die Aufgabe wird durch die in den unabhängigen Patentansprüchen beschriebenen Merkmale gelöst. Vorteilhafte Ausgestaltungen der Erfindung sind in den abhängigen Ansprüchen angegeben.

Erfindungsgemäß wird ein Verfahren zum Aufbau einer Datenverbindung über ein Kommunikationsnetz zwischen einem Teilnehmeridentitätsmodul, bevorzugt einer eUICC, und einem Server vorgeschlagen, wobei das Teilnehmeridentitätsmodul die Datenverbindung mittels eines Geräts aufbaut und wobei in dem Teilnehmeridentitätsmodul die folgenden Verfahrensschritte ablaufen: Empfangen, von dem Gerät, zumindest einen Verbindungsparameter betreffend einer ersten Datenverbindung zwischen dem Gerät und dem Server; und Senden eines Kommandos an das Gerät zum Aufbau einer zweiten Datenverbindung zu dem Server, wobei das Kommando den empfangenen zumindest einen [weiter mit ursprünglicher S. 4]

Verbindungsparameters umfasst mit welchem die zweite Datenverbindung zwischen Gerät und dem Server oder einem anderen Server aufzubauen ist.

Als ein Austausch von Daten wird hier eine Signalübertragung, eine wechselseitige Steuerung und in insbesondere eine Verbindung zwischen dem Gerät und der eUICC bzw. dem Gerät und dem/den Server(n) verstanden. In der Informationstheorie wird ein Datenaustausch unter anderem durch das Sender-Empfänger-Modell geprägt: Daten bzw. Informationen werden in Zeichen kodiert und dann von einem Sender über einen Übertragungskanal an einen Empfänger übertragen. Dabei ist entscheidend, dass Sender und Empfänger dieselbe Kodierung verwenden, damit der Empfänger die Nachricht versteht, d.h. die auszutauschenden Daten dekodieren kann.

Bei einem Teilnehmeridentitätsmodul im Sinne der Erfindung handelt es sich um ein in Baugröße und Ressourcenumfang reduziertes elektronisches Modul, welches einen Mikrocontroller und mindestens eine Datenschnittstelle zur Kommunikation mit dem Gerät aufweist. Diese Kommunikation erfolgt bevorzugt über ein erstes Verbindungsprotokoll, insbesondere einem Protokoll gemäß ETSI TS 102 221 bzw. ISO-7816. Dieses Teilnehmeridentitätsmodul weist einen sicheren Speicherbereich auf, indem Teilnehmeridentitätsdaten sicher eingebracht sind, um Manipulation- und/oder Missbrauchsversuche bei der Identifizierung und/oder Authentisierung am Netzwerk zu verhindern. Das Teilnehmeridentitätsmodul ist mittels eines Geräts betriebsfähig, wobei das Modul bis auf Versorgungssignale, wie Versorgungsspannung, Takt, Reset etc. autark ist.

Bei dem Teilnehmeridentitätsmodul handelt es sich beispielsweise um eine Chipkarte, auch als Universal Integrated Circuit Card, kurz UICC, oder SIM-Karte bezeichnet. Das Teilnehmeridentitätsmodul dient dazu, mit den im sicheren Speicherbereich gespeicherten maschinenlesbaren Teilnehmeridentitätsdaten einen Teilnehmer in einem Kommunikationsnetz zu identifizieren und für das Nutzen von Diensten zu authentifizieren. Unter SIM-Karte sind auch USIM, TSIM, ISIM, CSIM oder R-UIM gemäß dem Standard ETSI TS 102 223 gefasst.

Zudem kann das Teilnehmeridentitätsmodul auch ein integraler Bestandteil innerhalb des Geräts sein, beispielsweise ein fest verdrahteter elektronischer Baustein. Derartige Teilnehmeridentitätsmodule werden auch als eUICC bezeichnet. In dieser Bauform sind diese Teilnehmeridentitätsmodule nicht für eine Entnahme aus dem Gerät vorgesehen und können prinzipiell nicht einfach ausgetauscht werden. Derartige Teilnehmeridentitätsmodule können auch als embedded Secure Elements, also als eine sichere Hardwarekomponente im Gerät ausgestaltet sein.

Zudem kann das Teilnehmeridentitätsmodul auch eine Softwarekomponente in einem vertrauenswürdigen Teil eines Betriebssystems, einer sogenannten Trusted Execution Environment, kurz TEE, des Gerätes ausgebildet sein. Das Teilnehmeridentitätsmodul ist dann beispielsweise innerhalb einer gesicherten Laufzeitumgebung in Form von darin ablaufenden Programmen, sogenannten "Trustlets" ausgebildet.

Das Teilnehmeridentitätsmodul kann der Fernüberwachung, -kontrolle und -wartung von Geräten wie Maschinen, Anlagen und Systemen dienen. Es kann für Zähleinheiten wie Stromzähler, Warmwasserzähler etc. verwendet werden.

Teilnehmeridentitätsdaten im Sinn der Erfindung sind beispielsweise Daten, die einen Teilnehmer (eine Person oder ein Gerät) eindeutig im Kommunikationsnetz identifizieren. Dazu zählt beispielsweise eine Teilnehmerkennung, auch International Mobile Subscriber Identity, kurz IMSI und/oder teilnehmerspezifische Daten. Die IMSI ist das in einem Mobilfunkkommunikationsnetzwerk eindeutige Teilnehmeridentitätsdatei. Sie setzt sich zusammen aus dem Landescode MCC (Mobile Country Code), dem Netzwerkcode MNC (Mobile Network Code) und einer laufenden Nummer, die vom Netzbetreiber vergeben wird. Zudem sind Teilnehmeridentitätsdaten beispielsweise Daten, die einen Teilnehmer eindeutig am Kommunikationsnetz authentisieren, beispielsweise ein Authentisierungsalgorithmus, spezifische Algorithmus-Parameter, ein kryptografischer Authentisierungsschlüssel Ki und/oder ein kryptografischer Over-The-Air, kurz OTA, Schlüssel.

Ein Kommunikationsnetz ist eine technische Einrichtung, auf der die Übertragung von Signalen unter Identifizierung und/oder Authentisierung des Teilnehmers stattfindet. Das Kommunikationsnetz bietet eigene Dienste an (eigene Sprach- und Datendienste) und/oder ermöglicht das Nutzen von Diensten von externen Instanzen. Das Kommunikationsnetz ist bevorzugt ein Mobilfunknetz. Eine Gerät-zu-Gerät Kommunikation unter Aufsicht des Kommunikationsnetzes ist dabei möglich. Insbesondere wird hier ein Mobilfunknetz beispielsweise das "Global System for Mobile Communications", kurz GSM als Vertreter der zweiten Generation oder das "General Packet Radio Service", kurz GPRS bzw. "Universal Mobile Telecommunications System", kurz UMTS als Vertreter der dritten Generation, das "Long Term Evolution", kurz LTE, als Vertreter der vierten Generation als Mobilfunknetz verstanden oder ein Mobilfunknetz der 5. Generation mit dem derzeitigen Arbeitstitel "5G" als ein Kommunikationsnetz verstanden. Die Kommunikation im Kommunikationsnetz kann über einen sicheren Kanal erfolgen, beispielsweise so, wie es in den technischen Standards ETSI TS 102 225 und/oder ETSI TS 102 226 definiert ist, beispielsweise SCP80, SCP81 oder eine Transport-Layer-Security, TLS.

Erfindungsgemäß ist ein Server eine räumlich von dem Gerät entfernte Instanz. Der Server kann ein Teil des Kommunikationsnetzes sein.

Alternativ oder zusätzlich ist der Server eine externe Instanz (also keine Instanz des Kommunikationsnetzes). Datenverbindungen zu einem derartigen Server werden über sogenanntes "Gateway" des Kommunikationsnetzes aufgebaut. Dazu wird im Kommunikationsnetz ein Zugangspunkt, englisch Access Point Name, kurz APN, definiert. Über diesen APN kann dann eine Datenverbindung von einem Teilnehmer des Kommunikationsnetzes zu dem räumlich entfernten Server aufgebaut werden. Eine Adresse des APN referenziert dann auf das Gateway in dem Kommunikationsnetz, beispielsweise einem paketorientierten Datenübertragungsdienst, wie GPRS (GPRS = General Packet Radio Service). Die Bezeichnung APN wird auch in den Kommunikationsnetzen des GSM (2G), nämlich UMTS (3G), LTE (4G) und 5G verwendet.

Der Server ist bevorzugt ein Server des Geräte-Herstellers, um Steuereinheiten, z.B. ECUs (ECU = Electronic Control Unit), für Funktionalitäten des Geräts anzusprechen. Alternativ oder zusätzlich ist der Server ein Server zur Fernverwaltung der eUICC, beispielsweise ein sogenannter Provisionierungs-Server, um Aktualisierungen für Software, Firmware oder/und Betriebssystem des eUICC in das eUICC zu laden.

Bei einem Gerät im Sinn der Erfindung handelt es sich prinzipiell um ein Gerät oder eine Gerätekomponente mit Mitteln zur Kommunikation mit dem Kommunikationsnetzes, um Dienste des Kommunikationsnetzes nutzen zu können oder um Dienste eines Servers über ein Gateway des Kommunikationsnetzes nutzen zu können. Beispielsweise ist ein mobiles Gerät wie ein Smart Phone, ein Tablet-PC, ein Notebook, ein PDA unter dem Begriff zu fassen. Unter dem Gerät können beispielsweise auch Multimedia-Geräte wie digitale Bilderrahmen, Audiogeräte, Fernsehgeräte, E-Book-Reader verstanden werden, die ebenfalls Mittel zur Kommunikation mit dem Kommunikationsnetzwerk aufweisen.

Insbesondere ist das Gerät in einer Maschine, einem Automat und/oder einem Fahrzeug eingebracht. Ist das Gerät in einem Kraftfahrzeug eingebracht, hat es erfindungsgemäß eine eUICC als Teilnehmeridentitätsmodul integriert. Das Teilnehmeridentitätsmodul kann mittels des Geräts, beispielsweise eines Modems des Geräts, eine Datenverbindung zu einem Server über das Kommunikationsnetz aufbauen. Mit dem Gerät kann beispielsweise ein Server des Fahrzeug-Herstellers kontaktiert werden, um Steuereinheiten, z.B. ECUs (ECU = Electronic Control Unit) für Funktionalitäten des Fahrzeugs anzusprechen. Über das eUICC lässt sich ein Server im Hintergrundsystem des Mobilfunknetz-Betreibers, MNO, kontaktieren, beispielsweise ein Server, um Aktualisierungen für Software, Firmware oder/und Betriebssystem der eUICC in die eUICC zu laden. Es ist nun denkbar, dass die ECUs des Fahrzeugs und die eUICC über das gleiche Kommunikationsnetz Daten mit einem Server austauschen wollen.

Das Gerät umfasst bevorzugt Mittel, um über das Kommunikationsnetz mit einem entfernten Server zu kommunizieren. Für einen Aufbau der Datenverbindung zwischen eUICC und Server über das Kommunikationsnetz weist das Gerät bevorzugt ein Modem auf. Das Gerät hat dazu beispielsweise ein Modem als Kommunikationseinheit, um Datenpakete über weite Übertragungswege zwischen der eUICC und dem Server über das Kommunikationsnetz auszutauschen. Das Gerät bzw. das Modem empfängt dabei Datenpakete (APDU) von der eUICC gemäß eines ersten Verbindungsprotokolls und setzt diese Daten in ein zweites Verbindungsprotokoll, beispielsweise einem Internet-Protokoll, kurz IP, zur Übertragung der Daten über das Kommunikationsnetz an den Server um. Zudem empfängt das Gerät bzw. das Modem Datenpakete in dem zweiten Verbindungsprotokoll (IP-Protokoll) und setzt diese in Datenpakete (APDU) eines ersten Verbindungsprotokolls um, um diese an die eUICC zu übertragen. Das Gerät dient damit als ein lokaler Datenvermittler zwischen der eUICC und dem Kommunikationsnetz.

Das erste Verbindungsprotokoll ist vom zweiten Verbindungsprotokoll verschieden. Das erste Verbindungsprotokoll ist bevorzugt ein Protokoll gemäß ETSI TS 102 221 bzw. ISO-7816. Das zweite Verbindungsprotokoll ist ein zur Kommunikation zwischen Server und Gerät geeignetes Protokoll, beispielsweise das IP-Protokoll, ein SMS-basiertes Protokoll, ein HTTPS-basiertes Protokoll.

Das Umsetzen der Datenpakete vom ersten Verbindungsprotokoll zum zweiten Verbindungsprotokoll kann ein Hinzufügen von Protokoll-Kopfdaten, englisch Header-Daten, eines zweiten Verbindungsprotokolls beinhalten, beispielsweise werden Verbindungsparameter wie Server-Adressen und Protokoll-Informationen und ggf. weitere Verbindungsparameter angefügt, um eine Kommunikation über das Kommunikationsnetz zu ermöglichen. Bei dieser Erweiterung werden ggf. Kopfdaten des ersten Protokollkopfes entfernt.

Das Umsetzen der Datenpakete vom zweiten Verbindungsprotokoll zum ersten Verbindungsprotokoll kann ein Entfernen von Protokoll-Kopfdaten des zweiten Verbindungsprotokolls beinhalten. Die Protokoll-Kopfdaten eines Datenpakets eines Servers (zweites Verbindungsprotokoll) werden im Gerät entfernt, sodass eine Kommunikation an die eUICC möglich wird. Beispielsweise werden Verbindungsparameter wie Server-Adressen und Protokoll-Informationen und ggf. weitere Verbindungsparameter entfernt. Bei diesem Entfernen werden ggf. Kopfdaten des ersten Protokollkopfes hinzugefügt.

Ein Dienst ist insbesondere ein Sprachdienst oder ein Datendienst eines Servers, mit dem Informationen und/oder Daten über das Kommunikationsnetzwerk übertragen werden.

Die Verbindungsparameter sind Parameter, mit denen eine Datenverbindung klassifiziert und/oder parametrisiert ist. Durch die Verbindungsparameter betreffend die erste Datenverbindung werden aktuelle Eigenschaften der ersten Datenverbindung der eUICC mitgeteilt. Die Verbindungsparameter sind insbesondere Parameter, die der eUICC normalerweise nicht zur Verfügung stehen oder die nur im Rahmen von PULL-Request oder PUSH-Request im Vorfeld der Datenverbindung kostenpflichtig in die eUICC übertragen werden. Das Gerät hat in aller Regel wesentlich mehr Informationen über eine aktuelle Datenverbindung als die eUICC. Diese zusätzlichen Informationen werden nun erfindungsgemäß als Verbindungsparameter an die eUICC übergeben. Beispielhafte Verbindungsparameter sind eine augenblickliche (aktuell zur Datenverbindung zwischen Gerät und Server verwendete) IP-Protokollversion, insbesondere ob IPv4 oder IPv6; oder eine standardmäßig verwendete Domain-Name-System-Serveradresse (IPv4 bzw. IPv6) für den aktuell zur Datenverbindung angewählten Zugangspunkt; und/oder der aktuell vom Gerät angewählte Zugangspunkt; und/oder weitere Netzwerkparameter, die im Gerät verfügbar sind.

Die erste Datenverbindung zwischen Gerät und Server ist eine Verbindung, die bereits eingerichtet ist oder die noch eingerichtet werden soll, um Daten zwischen dem Gerät bzw. von (Sub-)Einheiten des Geräts, wie ECUs oder dem Modem, mit einem Server auszutauschen. Diese erste Datenverbindung ist bevorzugt IP-Protokoll-basiert, sodass die Daten in Paketform über das Kommunikationsnetz übertragen werden.

Dabei werden in der eUICC die Verbindungsparameter betreffend die erste Datenverbindung vom Gerät erhalten. Dazu wird bevorzugt ein Datenpaket, englisch Application Protocol Data Unit, kurz APDU, des ersten Verbindungsprotokolls verwendet. Ein APDU ist ein kombinierter Kommando-/Datenblock des ersten Verbindungsprotokolls zwischen der eUICC und dem Gerät. Die Struktur der APDU ist durch den Standard ISO-7816-4 definiert. APDUs stellen ein Informationselement der Anwendungsebene (Schicht 7 des OSI-Schichtenmodels) dar.

Um eine zweite Datenverbindung zwischen eUICC und dem Server aufzubauen, sendet die eUICC zumindest ein Kommando an das Gerät. Das Kommando ist beispielsweise ein proaktives Kommando, insbesondere ein "OPEN CHANNEL" Kommando gemäß dem Standard ETSI TS 102 223, welches im Rahmen des ersten Verbindungsprotokolls übertragen wird.

Die zweite Datenverbindung zwischen eUICC und Server erfolgt mittels des Geräts, wobei der Verbindungsabschnitt zwischen Server und Gerät beispielsweise über das zweite Verbindungsprotokoll erfolgt und der Verbindungsabschnitt zwischen Gerät und eUICC beispielsweise über das erste Verbindungsprotokoll erfolgt. Die Umsetzung der Daten vom ersten Protokoll in das zweite Protokoll erfolgt im Gerät, beispielsweise einem Modem als Kommunikationseinheit des Geräts.

Die zweite Datenverbindung kann zum gleichen Server bestehen, wie die ersten Datenverbindung. Alternativ wird die zweite Datenverbindung zu einem anderen Server aufgebaut. Die beiden Datenverbindungen erfolgen mit dem gleichen (zweiten) Protokoll datenpaket-basiert. Dies ermöglicht, dass die erste Datenverbindung und die zweite Datenverbindung zeitgleich vorhanden sein können. Das bedeutet, dass Aufbau, Betrieb und/oder Abbau einer Datenverbindung zwischen Gerät und Server zeitgleich zum Aufbau, Betrieb und/oder Abbau der anderen Datenverbindung zwischen Gerät und Server erfolgen kann. Zeitgleich heißt hierbei auch, dass zwei Datenpakete der jeweiligen (aufgebauten) Datenverbindung sequentiell nacheinander übertragen werden können.

Die Verbindungsparameter, mit denen die zweite Datenverbindung aufzubauen ist, sollen nun mit den Verbindungsparametern der ersten Datenverbindung übereinstimmen. Dadurch wird das gleichzeitige Verwenden von zwei Datenverbindungen mit unterschiedlichen Verbindungsparametern über das gleiche Kommunikationsnetz unterbunden und ein Daten- und/oder Zeitverlust aufgrund einer drohenden Zwangstrennung durch das Kommunikationsnetz wird verhindert.

Die zweite Datenverbindung wird dabei insbesondere zum selben Server, vorzugsweise über den selben APN, aufgebaut. In diesem Fall ist das Kommunikationsnetz insbesondere single-APN-fähig. Es werden insbesondere mehrere Datenverbindungen über (genau) einen APN vom Kommunikationsnetz zugelassen.

Zusätzlich kann die zweite Datenverbindung zu einem anderen Server oder einen anderen APN aufgebaut werden, sodass die erste Datenverbindung zu einem ersten Server oder einem ersten APN und die zweite Datenverbindung zu einem zweiten Server oder einem zweiten APN aufgebaut wird. In diesem Fall ist das Kommunikationsnetz multi-APN-fähig, d.h. mehrere Datenverbindungen über verschiedene APN werden vom Kommunikationsnetz zugelassen.

In einer bevorzugten Ausgestaltung ist der empfangene Verbindungsparameter eine Information über einen Zustand der ersten Datenverbindung. Der Zustand (=Status) der ersten Datenverbindung kann "aktiv" oder "inaktiv" sein. Damit wird der eUICC signalisiert, ob das Gerät eine erste aktive Datenverbindung, also eine eingerichtete und zum Austausch von Daten verwendbare Verbindung aufweist. In diesem Fall muss zur Vermeidung von Zwangstrennungen und entsprechendem Datenverlust die zweite Datenverbindung mit den gleichen Verbindungsparametern wie die erste Datenverbindung aufgebaut werden.

Alternativ erfährt die eUICC, dass die erste Datenverbindung (noch) nicht aktiv ist, also beispielsweise gerade kein Verbindungsaufbau erfolgt oder gar keine Datenverbindung zwischen Server und Gerät besteht. In diesem Fall können die gewohnten Verbindungsparameter der eUICC verwendet werden. Der Status signalisiert somit ein Konfliktpotenzial und die Anweisung, die Verbindungsparameter der ersten Datenverbindung zu verwenden (oder nicht).

Bevorzugt ist der Verbindungsparameter eine Information über eine Protokoll-Version (des zweiten Verbindungsprotokolls) der ersten Datenverbindung, wobei das Teilnehmeridentitätsmodul den (zwangsweisen) Aufbau der zweiten Datenverbindung mit der gleichen Protokoll-Version durch das Senden des Kommandos anzeigt. Die eUICC instruiert somit durch das Senden des Kommandos, dass die gleiche Protokoll-Version zu verwenden ist. Damit ist sichergestellt, dass die eUICC keinen Konflikt aufgrund unterschiedlicher Protokoll-Versionen verursacht. Ist das zweite Verbindungsprotokoll beispielsweise ein IP-Protokoll, dann wird üblicherweise eine vom Gerät benutzte erste Datenverbindung mittels IP Version 6 bei einer darauffolgenden Anfrage einer zweiten Datenverbindung mittels IP Version 4 unterbrochen. Da die eUICC nun in Kenntnis über die aktuelle Protokoll-Version ist, kann der Aufbau der zweiten Datenverbindung mit der gleichen (aktuellen) Protokoll-Version durch das Kommando-Senden instruiert werden.

In einer bevorzugten Ausgestaltung ist der Verbindungsparameter eine Domain-Name-System, kurz DNS, Server-Adresse. Diese DNS-Serveradresse ist beispielsweise die vom Gerät standardmäßig verwendete DNS-Serveradresse. Da sich diese DNS-Serveradresse im Lebenszyklus des Geräts und im Lebenszyklus der eUICC mehrfach ändern kann, kann mittels dieses Verfahrens die aktuelle DNS-Serveradresse von der eUICC beim Aufbau der zweiten Datenverbindung angegeben werden. Eine Personalisierung der eUICC mit der DNS-Serveradresse kann unterbleiben, was Kosten bei der Inbetriebnahme der eUICC spart. Zudem wird verhindert, dass eine mittlerweile veraltete DNS-Serveradresse beim Verbindungsaufbau verwendet wird, was zu ungewollten Zeitverzögerungen führen würden.

In einer bevorzugten Ausgestaltung ist der Verbindungsparameter ein Zugangspunkt (APN), beispielsweise ein aktuell vom Gerät verwendeter Zugangspunkt oder eine entsprechende Adresse des Zugangspunktes. Da sich dieser APN bzw. die APN-Adresse im Lebenszyklus des Kommunikationsnetzes mehrfach ändern kann, kann nun stets der aktuelle APN bzw. die aktuelle APN-Adresse bereits bei Aufbau der zweiten Datenverbindung angegeben werden. Eine Personalisierung der eUICC mit der APN-Adresse kann unterbleiben, was Kosten bei der Personalisierung bzw. Herstellung bzw. Inbetriebnahme der eUICC spart. Zudem wird verhindert, dass veraltete APN, oder APN-Adressen beim Verbindungsaufbau verwendet werden, was zu ungewollten Zeitverzögerungen führen würden.

Bevorzugt wird vor dem Empfangen-Schritt der zumindest eine Verbindungsparameter am Kommunikationsnetz von dem Gerät abgefragt bzw. angefordert. Das Gerät kann also beispielsweise eine DNS-Serveradresse des Kommunikationsnetzes oder einen APN/APN-Adresse des Kommunikationsnetzes vom Kommunikationsnetz abfragen und der eUICC als Verbindungsparameter bereitstellen.

Bevorzugt wird der empfangene zumindest eine Verbindungsparameter in einer Sicherheits-Domäne, englisch Security-Domain, kurz SD, des Teilnehmeridentitätsmodul abgelegt. Auf dieses SD darf dann (nur) vor dem Senden-Schritt zugegriffen werden.

Bevorzugt wird der empfangene zumindest eine Verbindungsparameter über ein Applet des Teilnehmeridentitätsmoduls an ein Betriebssystem des Teilnehmeridentitätsmodul übermittelt. Dazu wird bevorzugt eine (proprietäre) Java-Application-Programming-Interface, kurz Java-API, verwendet, mit der die Verbindungsparameter über eine Java-Laufzeitumgebung, kurz JCRE, an das Betriebssystem übertragen werden, um dann für den Verbindungsaufbau der zweiten Datenverbindung als Kommando an das Gerät gesendet zu werden.

Bevorzugt wird der zumindest eine Verbindungsparameter in periodischen Zeitabständen oder ereignisgesteuert aktualisiert. Die Zeitabstände sind beispielsweise fest im Kommunikationsnetz vorgegeben oder werden vom Gerät dynamisch festgelegt. Somit wird die eUICC automatisch über Änderungen der ersten Datenverbindung des Geräts informiert werden. Insbesondere ein Wechsel der Protokoll-Version (von IPv6 auf IPv4), der möglicherweise durch die Bewegung des Geräts (Kfz) verursacht wird (zwischen zwei Funkzellen oder von einem Land in ein anderes Land, in dem eine Protokoll-Version nicht unterstützt wird), kann erfolgreich erkannt und zeitnah an die eUICC übermittelt werden. Ein Ereignis ist dabei ein Hand-Over oder der Wechsel des MNC bzw. MCC Codes.

In einem weiteren Aspekt der Erfindung ist ein Verfahren zum Bereitstellen von Verbindungsparametern für ein Teilnehmeridentitätsmodul, bevorzugt eine eUICC, durch ein Gerät vorgesehen, wobei das Teilnehmeridentitätsmodul eine Datenverbindung gemäß dem vorhergehenden Verfahren aufbaut, wobei dazu im Gerät die folgenden Schritte ablaufen: Empfangen, von dem Teilnehmeridentitätsmodul, eine Verbindungsparameter-Anfrage; Senden, an das Teilnehmeridentitätsmodul, zumindest eines Verbindungsparameters betreffend eine erste Datenverbindung zwischen dem Gerät und einem Server; Empfangen, von dem Teilnehmeridentitätsmodul, eines Kommandos zum Aufbau einer zweiten Datenverbindung zu dem Server, wobei das Kommando den gesendeten zumindest einen Verbindungsparameters umfasst; und Aufbau der zweiten Datenverbindung zum Server unter Verwendung des zumindest einen Verbindungsparameters.

Bevorzugt wird vor dem Senden-Schritt, beim Server eine Domain-Name-Server-Adresse und/oder eine Adresse eines zu verwendeten Zugangspunktes abgefragt.

In einem weiteren Aspekt ist ein Teilnehmeridentitätsmodul eingerichtet für den Aufbau einer Datenverbindung mit einem Server gemäß dem vorhergehenden Verfahren, wobei das Teilnehmeridentitätsmodul die Datenverbindung mittels eines Geräts aufbaut, wobei das Teilnehmeridentitätsmodul umfasst: eine Schnittstelle eingerichtet zum Senden eines Kommandos an das Gerät, um zumindest einen Verbindungsparameter betreffend eine erste Datenverbindung zwischen dem Gerät und einem Server abzufragen und zum Empfangen des zumindest einen Verbindungsparameters von dem Gerät; einen Datenspeicher, eingerichtet zum Ablegen des empfangenen zumindest einen Verbindungsparameters; ein Betriebssystem, eingerichtet zum Konfigurieren eines Kommandos zum Aufbau einer zweiten Datenverbindung zu dem Server, wobei das Kommando an das Gerät gesendet wird und den empfangenen zumindest einen Verbindungsparameters umfasst mit welchem die zweite Datenverbindung zwischen Gerät und Server aufzubauen ist.

Bevorzugt sind die Kommandos APDU-Kommandos.

Bevorzugt umfasst das Teilnehmeridentitätsmodul ein Applet, das ausführbar abgelegt in dem Speicherbereich ist und eingerichtet ist, den empfangenen zumindest einen Verbindungsparameter an das Betriebssystem des Teilnehmeridentitätsmoduls zu übermitteln.

Zudem ist ein Computerprogrammprodukt vorgesehen, welches ausführbar installiert in einem Teilnehmeridentitätsmodul ist und Mittel zum Ausführen der Verfahrensschritte einer der vorhergehenden Verfahren hat. Bevorzugt ist das Computerprogrammprodukt ein Java Card Applet, welches in der eUICC zum Ausführen der Verfahrensschritte eingebracht ist.

Eine Funktion ist ein in dem Teilnehmeridentitätsmodul installierter ausführbarer Programmcode, der sich durch ein der Funktion entsprechendes Kommando, das an die Teilnehmeridentitätsmodul gesandt wird, zur Ausführung bringen lässt. Eine Funktion kann Teil eines Applets auf dem Teilnehmeridentitätsmodul sein. Mehrere Funktionen können durch ein Applet nacheinander aufgerufen werden.

### KURZE BESCHREIBUNG DER FIGUREN

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.
Fig. 1 zeigt ein Ausführungsbeispiel eines Systems zum Aufbau einer Datenverbindung mit einem Server, einem erfindungsgemäßen Gerät und einem erfindungsgemäßen Teilnehmeridentitätsmodul;
Fig. 2 zeigt ein Blockschaltbild eines erfindungsgemäßen Teilnehmeridentitätsmoduls;
Fig. 3 zeigt ein weiteres Ausführungsbeispiel eines Systems zum Aufbau einer Datenverbindung mit einem Server, einem erfindungsgemäßen Gerät und einem erfindungsgemäßen Teilnehmeridentitätsmodul;
Fig. 4 zeigt ein Ausführungsbeispiel eines Ablaufdiagrams eines erfindungsgemäßen Verfahrens in einem Teilnehmeridentitätsmodul; und
Fig. 5 zeigt ein Ausführungsbeispiel eines Ablaufdiagrams eines erfindungsgemäßen Verfahrens in einem Gerät.

### DETALLIERTE BESCHREIBUNG VON AUSFÜHRUNGSBEISPIELEN

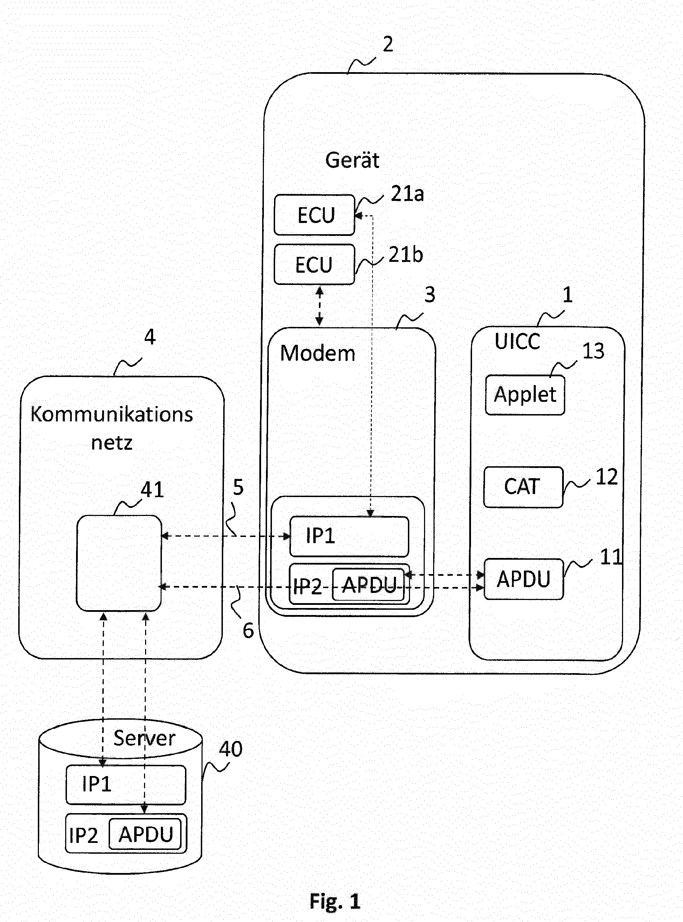

Fig. 1 zeigt ein Ausführungsbeispiel eines Systems zum Aufbau einer Datenverbindung mit einem Server 40, einem erfindungsgemäßen Gerät 2 und einem erfindungsgemäßen Teilnehmeridentitätsmodul 1, nachfolgend als eUICC 1 bezeichnet.

Das Gerät 2 ist beispielsweise ein M2M-Gerät in einem Kfz. Das Gerät 2 umfasst eine Mehrzahl von ECUs 21, hier stellvertretend sind zwei ECUs 21a und 21b dargestellt. Durch diese ECUs 21 wird die Funktionalitäten des Geräts 2 gesteuert. Die ECUs können Motorsteuerung, Getriebesteuerung, Klimasteuerung, und dergleichen sein.

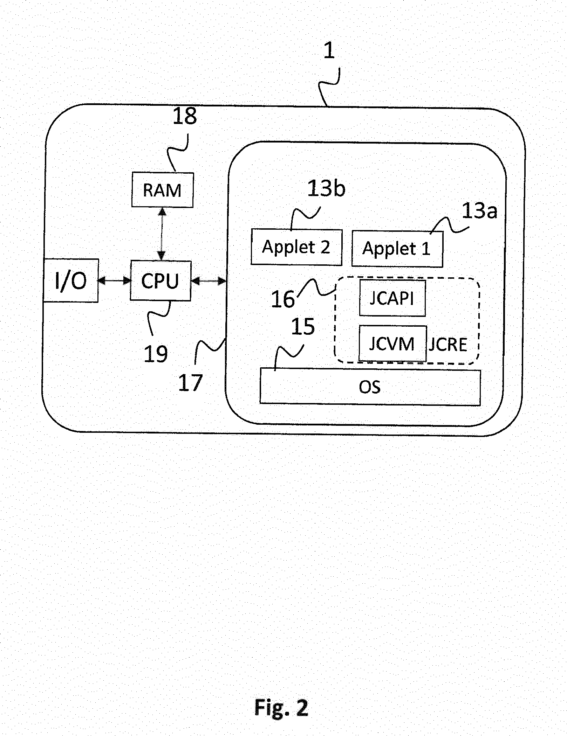

Die eUICC 1 ist betriebsbereit in das Gerät 2 eingebracht und wird vom Gerät 2 mit einer Versorgungsspannung und einem Takt versorgt. Die eUlCC 1 ist in Fig. 2 detaillierter dargestellt. In Fig. 1 ist bereits angedeutet, dass die eUICC 1 Applets 13 aufweist. Diese Applets 13 können über eine Card Application Toolkit, CAT, 12, unterschiedliche APDU-Kommandos 11 an das Gerät 2 senden.

Das Gerät 2 umfasst zudem ein Modem 3. Das Modem 3 kann beispielsweise als eine logische Einheit zum Umsetzen von Daten zwischen der eUICC 1 und dem Server 40 angesehen werden. Das Gerät 2 kann durch das Modem 3 eine Kommunikationsverbindung zum eUICC 1 aufbauen. Diese Verbindung erfolgt über ein erstes Verbindungsprotokoll und ist APDU-Kommandobasiert.

Das Modem 3 ist dabei eine Kommunikationseinheit des Geräts, um auch Daten des Geräts 2 oder der eUICC 1 über ein Kommunikationsnetz 4 auszutauschen. Das Modem 3 kann eine erste IP-datenpaketbasierte Datenverbindung 5 über das Kommunikationsnetz 4. hier ein Mobilfunknetz, aufbauen. Das Netz 4 leitet diese Datenpakete (IP1) über ein Gateway 41 an einen an das Netz 4 angeschlossenen Server 40 weiter. Der Server 40 ist hier demnach eine externe Instanz, die kein Bestandteil des Kommunikationsnetzes 4 ist.

Das Modem 3 kann zudem eine zweite IP-datenpaketbasierte Datenverbindung 6 über das Kommunikationsnetz 4 aufbauen. Das Netz 4 leitet diese Datenpakete (IP2) über das Gateway 41 an den Server 40 weiter. Das Netz 4 ist in diesem Fall ein single-APN fähiges Netz 4.

Die zweite Datenverbindung 6 dient dabei dem Austausch von Daten zwischen eUICC 1 und Server 40. Da die eUICC 1 keine Funktionalität zum direkten Datenaustausch mit dem Server 40 aufweist, dient das Modem 3 als Protokoll-Umsetzer. Die im ersten Verbindungsprotokoll (APDU) ausgetauschten Daten zwischen eUICC 1 und Modem 3 werden im Modem 3 in ein zweites Verbindungsprotokoll (IP) umgesetzt. Dazu werden Daten der eUICC 1 erweitert, es werden insbesondere Kopfdaten wie Server-Adresse des Servers 40 und Protokoll-Versionen festgelegt. Zusätzlich werden Daten des Servers 40 entfernt, es werden insbesondere Kopfdaten wie Server-Adresse des Servers 40 und Protokoll-Versionen entfernt, um die APDUs an die eUICC 1 zu senden.

Die eUICC 1 hat Hoheit über die Wahl der Verbindungsparameter zum Aufbau der zweiten Datenverbindung 6. Beispielsweise werden proaktive Kommandos gemäß ETSI TS 102 223 verwendet, wie "Open Channel" etc.

In der eUICC 1 ist ein Applet 13 installiert, das eingerichtet ist für ein Empfangen zumindest eines Verbindungsparameters der ersten Datenverbindung 5. Das Applet 13 ist dazu eingerichtet, für den Aufbau der zweiten Datenverbindung 6, den empfangenen Verbindungsparameter als Kommando (APDU) an das Modem 3 zu senden, sodass dieses Modem 3, die zweite Datenverbindung 6 mit den gleichen Verbindungsparametern aufbaut, die bereits bei der ersten Datenverbindung 5 verwendet werden.

Die Verbindungsparameter sind insbesondere ein Zustand der ersten Datenverbindung 5, insbesondere ob aktiv oder inaktiv (wobei alle Zustände wie Aufbau, Abbau, Betrieb, als aktiver Zustand gewertet werden). Zudem kann eine Version des zweiten Datenprotokolls, beispielsweise IPv4 oder IPv6, übermittelt werden. Zudem wird eine aktuelle DNS-Server Adresse angegeben, um die Serveradresse 40 aufzulösen. Zudem wird eine Adresse des Zugangspunktes APN 41 übermittelt.

Die eUICC 1 stellt dazu neue (proprietäre) APDU Kommandos zur Verfügung. Mittels dieser APDU-Kommandos übermittelt das Modem 3 des Geräts 2, beispielsweise die Applikationsschicht, die Verbindungsparameter der ersten Datenverbindung 5 an die eUICC 1. Diese Verbindungsparameter werden entweder in einer Security-Domain der eUICC 1 abgelegt oder mittels des Applets 13 über eine (proprietäre JAVA-API) in einer Java Laufzeitumgebung an das Betriebssystem der eUICC 1 übermittelt.

Diese Verbindungsparameter werden periodisch bzw. eventgesteuert zwischen Gerät 2 und eUICC 1 aktualisiert, so dass die eUICC 1 jederzeit über Änderungen der ersten Datenverbindung 5 des Geräts 2 (Modem 3) informiert ist, beispielsweise wenn das Gerät 2 aufgrund eines Landwechsels die IP-Protokoll-Version wechselt. Des Weiteren kann das Modem 3 die IP-Adressen der standardmäßig festgelegten DNS Server mitteilen, sodass eine Adressauflösung schnell erfolgreich ist. Zudem teilt das Gerät 2 den aktuell verwendeten Zugangspunkt, APN, 41 mit, den es aus dem Kommunikationsnetz 4 erfragt hat und an die eUICC 1 übermittelt. Die eUICC 1 muss daher nicht mehr mit diesen Adressen von DNS-Server oder APN vorpersonalisiert werden, sondern die eUICC 1 bekommt diese aktuell übermittelt. Damit kann ein Netzbetreiber diese Adressen während der Laufzeit auch ändern. Insbesondere bei Geräten 2, die mehrjährig im Betrieb sein können, ist das von Vorteil.

Fig. 2 zeigt ein Blockschaltbild eines erfindungsgemäßen Teilnehmeridentitätsmoduls 1, vorzugsweise eine fest verdrahtete eUICC 1. Alternativ ist die eUICC 1 ein portabler Datenträger mit einer anderen Bauform. Das Teilnehmeridentitätsmodul 1 hat ein Java Card^{™} Betriebssystem 15. Auch andere - beispielsweise rein native - Kartenbetriebssysteme 15 sind denkbar.

Die eUICC 1 ist dazu ausgestaltet mit dem Gerät 2 gemäß Fig. 1 Daten auszutauschen. Zur Datenübertragung bzw. Kommunikation zwischen der eUICC 1 und dem Gerät 2 weisen sowohl die eUICC 1 als auch das Gerät 2 jeweils geeignete Kommunikationsschnittstellen I/O auf. Die Schnittstellen können beispielsweise so ausgestaltet sein, dass die Kommunikation zwischen diesen bzw. zwischen der eUICC 1 und dem Gerät 2 galvanisch, d.h. kontaktbehaftet, mit der Schnittstelle 12 des Terminals 10 verbunden werden.

Die eUICC 1 hat zudem eine zentrale Prozessor-bzw. Recheneinheit, CPU 19, die in Kommunikationsverbindung mit der Schnittstelle I/O steht. Bekanntermaßen gehören zu den primären Aufgaben der CPU 19 das Ausführen von arithmetischen und logischen Funktionen und das Lesen und Schreiben von Datenelementen, wie dies durch von der CPU 19 ausgeführten Programmcode definiert wird. Die CPU 19 steht ferner mit einem flüchtigen Arbeitsspeicher, RAM 18 und einem nichtflüchtigen wieder beschreibbaren Speicher 17 in Verbindung. Vorzugsweise handelt es sich bei dem nichtflüchtigen Speicher 17 um einen Flash-Speicher (Flash-EEPROM). Dabei kann es sich beispielsweise um einen Flash-Speicher mit einer NAND- oder einer NOR- Architektur handeln.

Bei der in Figur 1 dargestellten bevorzugten Ausführungsform ist in dem nichtflüchtigen Speicher 17 Programmcode gespeichert, der von der CPU 19 ausgeführt werden kann. Insbesondere kann in dem nichtflüchtigen Speicher 17 der Programmcode des Chipkarten-Betriebssystems, OS, 15, der Java Card Laufzeitumgebung, JCRE, 16 (bestehend aus Java Card Virtual Machine, JCVM und Java Card Application Programming Interfaces, JCAPI) sowie einer ersten Applikation 13a und einer zweiten Applikation 13b hinterlegt sein. Dabei liegen die Applikationen 13a, 13b vorzugsweise in Form von Java Card^{™} Applets vor. Zudem ist der in Fig. 1 gezeigte CAT 12 gemäß ETSI TS 102 223 eingebracht.

Die Kommunikation zwischen dem Gerät 2 und der eUICC 1 erfolgt üblicherweise gemäß den in der internationalen Normen ISO/IEC 7816-3 und ISO/IEC 7816-4 definierten Protokollen, auf die hiermit ausdrücklich Bezug genommen wird.

Vorzugsweise findet der gesamte Datenaustausch zwischen der eUlCC 1 und dem Gerät 2 unter Verwendung der sogenannten APDUs (application protocol data units) gemäß der Norm ISO/IEC 7816-4 statt. Eine APDU stellt eine Dateneinheit der Anwendungsschicht dar, also eine Art Container, mit dem Kommandos und/ oder Daten an die eUICC 1 übertragen werden. Man unterscheidet zwischen Kommando-APDUs, die von einem Gerät 2 an an die eUICC 1 gesendet werden, und Antwort-APDUs, die von der eUICC 1 in Reaktion auf eine Kommando-APDU an das Gerät 2 gesendet werden. Das Gerät 2 kommuniziert bevorzugt nur mit einem Applet 13 auf der eUICC 1.

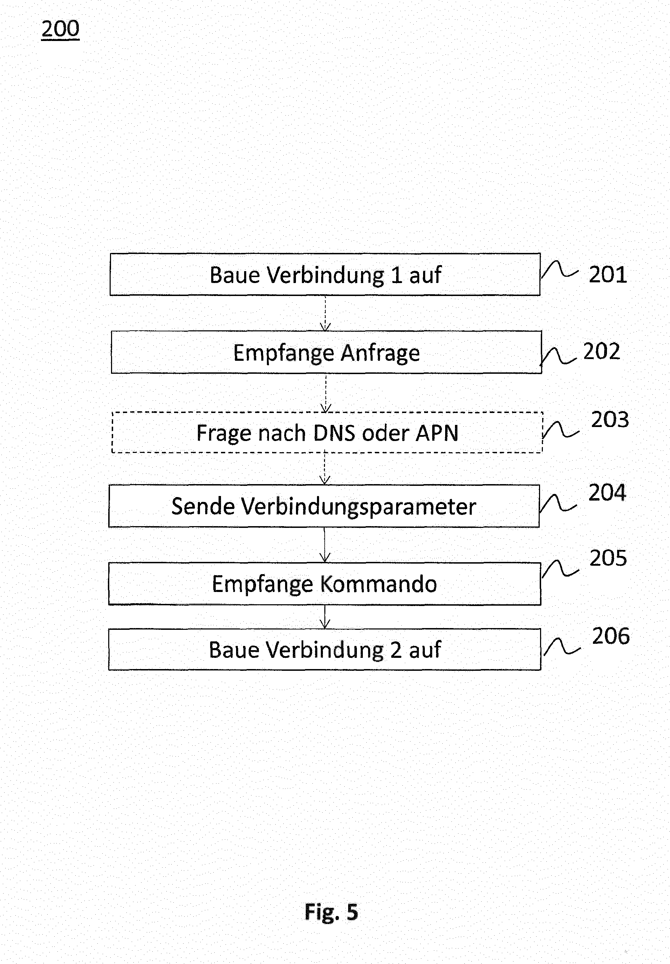

Um nun Daten mit einem Server 40 (Fig. 1) auszutauschen, wird eine Transport Layer Security gemäß ETSI TS 102 227 verwendet. Der Server 40 weist dazu ebenfalls Applikationen auf, um im Zusammenspiel mit dem in der eUICC 1 eingebrachten Applet 13 Daten auszutauschen. Weitergehende Details dazu können aus dem Whitepaper "Mobile Connect SIM Applet Interoperability Stepping Stones" aus dem Jahr 2016 bezogen werden, auf das hier eindeutig Bezug genommen wird, siehe insbesondere Abschnitt 5 mit den Figuren 5.1 und 5.2.

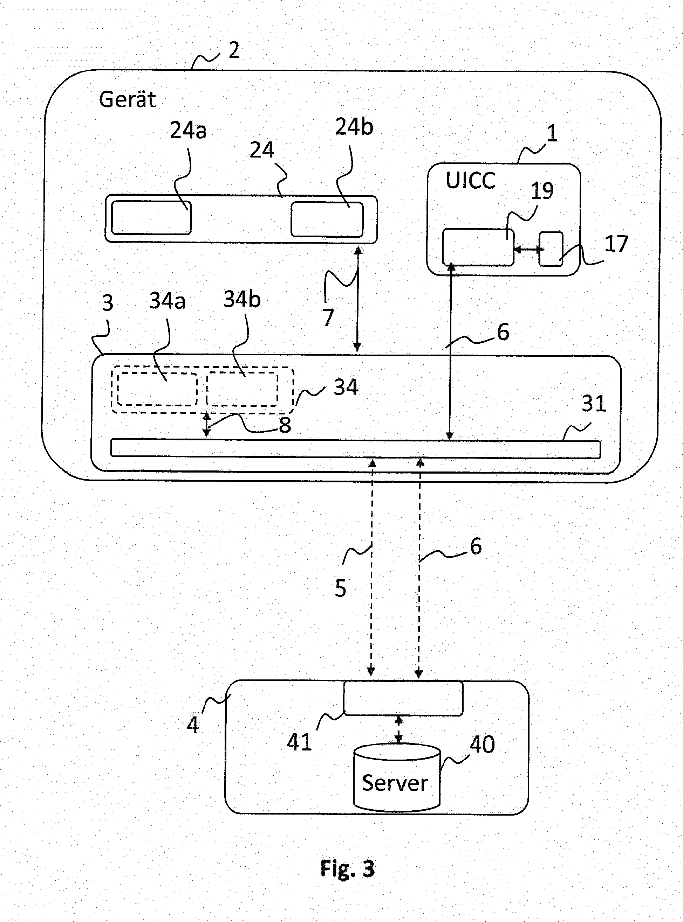

Fig. 3 zeigt ein weiteres Ausführungsbeispiel eines System zum Aufbau einer Datenverbindung mit einem Server 40, einem erfindungsgemäßen Gerät 2 und einem erfindungsgemäßen Teilnehmeridentitätsmodul 1. Das Gerät 2 umfasst die eUICC 1 und kann gemäß dem in Fig. 1 und Fig. 2 ausführlich beschriebenen Verfahren Daten austauschen. Das Gerät 2 weist auch ein Modem 3 auf, mit dem das Gerät 2 über ein Kommunikationsnetz 4 mit einem Server 40 Daten austauschen kann.

Der Server 40 ist dabei, im Unterschied zu Fig. 1, ein Bestandteil des Kommunikationsnetzes 4. Beispielsweise sind in dem Server 40 Aktualisierungen von Betriebssystem, Firmware, Applikationen, JCAPI etc. der eUICC 1 abgelegt. Mittels einer zweiten Datenverbindung 6 ist die eUICC 1 eingerichtet, auf diesen Server 40 zuzugreifen und die darin enthaltenen Daten zu empfangen. Der dazu benötigte Verbindungsaufbau erfolgt mittels des Modems 3, der die APDU-Kommunikation (gemäß Fig.2) in eine IP-basierte Kommunikation mittels der Sub-Einheit 31 umsetzt. Diese Sub-Einheit 31 repräsentiert eine Schicht zum Verpacken der APDU Kommandos in Datenpakete gemäß dem IP-Protokoll. Dazu werden die APDU Kommandos als Datenteil eines IP-Pakets zwischen dem Server 40 und der eUICC 1 ausgetauscht.

Das Mobilfunk-Modem 3 des Geräts 2 hat neben der Schnittstelle zur eUICC 1 auch eine Anwendungsschicht 34 mit eigenen Applikationen 34a, 34b. Auch das Gerät 2 kann ein eigenes Betriebssystem beispielsweise basierend auf Android, Linux, oder iOS aufweisen und verwendet ggf. eigene Applikationen 24a, 24b in einer Geräte-Anwendungsschicht 24. Entweder das Gerät 2 oder das Modem 3 werden üblicherweise eigenständig eine erste Datenverbindung 5 zu dem Netz 4 aufbauen und dazu bevorzugt ein IP-Protokoll der Version IPv6, unter Benutzung eines vorgegebenen APN 41 verwenden. Wenn nun die eUICC 1 ebenfalls versucht, mit dem gleichen APN 41 eine zweite Datenverbindung 6 zu einer Server-Adresse eines Servers 40 aufzubauen, um beispielsweise die Teilnehmeridentitätsdaten der eUICC 1 zu verwalten (Subskriptions-Verwaltung mit profile download, profile enable/disable, etc.) oder um eine Fernverwaltung der Applets 13 oder des OS 15 oder der JCRE 16 zu ermöglichen, muss ein Konflikt zwischen beiden Datenverbindungen 5, 6 vermieden werden, um eine Zwangstrennung durch das Netz 4 zu verhindern.

Um das zu verhindern wird der in Fig. 1 bereits beschriebene Mechanismus angewendet, nämlich das Empfangen eines der folgenden Verbindungsparameter bezüglich der ersten Datenverbindung 5, wie Status der Datenverbindung, IP-Protokollversion, APN, APN-Adresse(n), DNS-Serveradresse(n) und dergleichen mehr. Diese Parameter werden in der eUICC 1 empfangen (mittels APDU), dort im Rahmen eines Applets 13 an das OS 15 übermittelt und für den Verbindungsaufbau der zweiten Datenverbindung 6 an das Modem 3 berichtet. Das Modem 3 ist durch das Senden-Kommando von der eUICC 1 sodann instruiert, die gleichen Verbindungsparameter zu verwenden, um einen Konflikt aufgrund unterschiedlicher Datenverbindungsparameter zu verhindern.

Die eUICC 1 ist dabei jederzeit über aktuelle Verbindungsparameter informiert, z.B. über das aktuell benutzte IP-Protokoll (IPv4/IPv6), eine IP-Adresse eines DNS-Servers des aktuellen APN 41, der aktuell benutzte APN 41 des Modems 3 etc. Bei einem eUICC 1 basiertem Verbindungsaufbau, beispielsweise via "OpenChannel" Kommando gemäß ETSI TS 102 223 wird nur das IP-Protokoll benutzt, welches aktuell auch vom Modem 3 benutzt wird. Dadurch gibt es keine Vermischung von Anfragen mit unterschiedlichen IP-Protokoll-Versionen (IPv6 und IPv4) am Netz 4 und es entsteht keine Fehler- oder Alarm-Situation, die zu einer Zwangstrennung führen würde. Zudem sind nun stets aktuelle IP-Adressen von DNS-Server und/oder APN in der eUICC 1 enthalten und eine entsprechende Personalisierung oder ein üblicherweise benötigter PULL/PUSH-Request kann unterbleiben, wodurch Kosten und Zeit gespart wird.

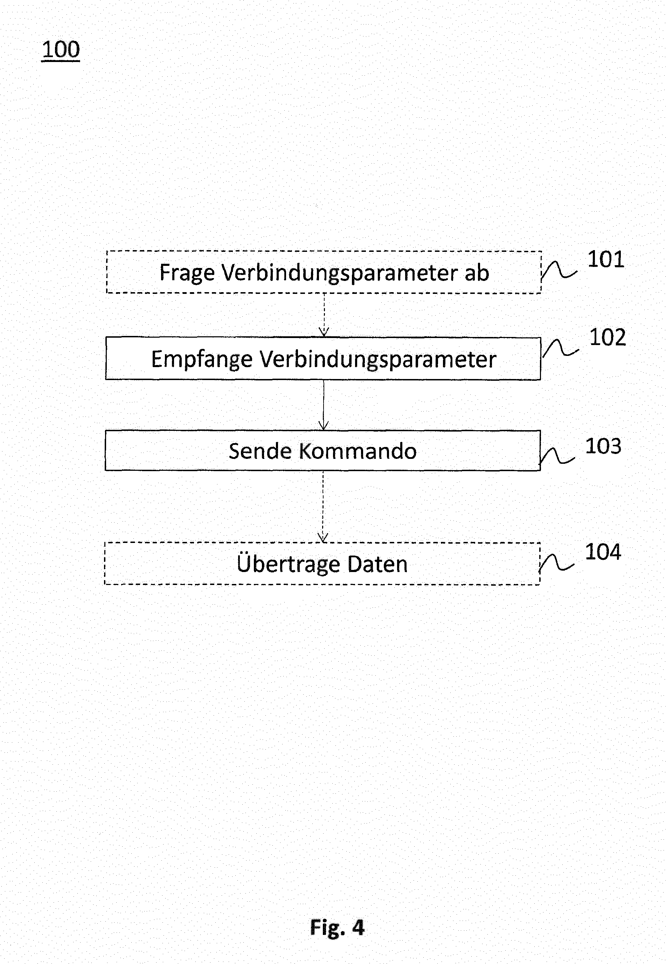

Fig. 4 zeigt ein Ausführungsbeispiel eines Ablaufdiagrams 100 eines erfindungsgemäßen Verfahrens in einem Teilnehmeridentitätsmodul 1. Die eUICC 1 entspricht der eUICC 1 der Fig. 2. Im optionalen Schritt 101 fragt die eUICC 1 die Verbindungsparameter vom Gerät 2 ab. Im Schritt 102 empfängt die eUICC 1 die Verbindungsparameter einer ersten Datenverbindung 5 vom Gerät 2. Im Schritt 103 sendet die eUICC 1 ein Kommando zum Aufbauen einer zweiten Datenverbindung 6 an das Gerät 2, wobei das Kommando die Verbindungsparameter umfasst, mit denen die zweite Datenverbindung 6 aufzubauen ist. Nach dem Aufbau der Datenverbindung werden im optionalen Schritt 104 Daten zwischen dem Server 40 und der eUICC 1 ausgetauscht.

Dabei ist die eUICC 1 in dem Gerät 2 fest- oder entnehmbar installiert. Die eUICC 1 hat eine Sicherheitsdomäne (=SD) mit unterschiedlichen Privilegien und Konfigurationen für das Verwalten von den Teilnehmerprofilen, wie beispielsweise eine ISD-R, die durch den Server 40 (beispielsweise ein Subscription Manager Secure Routing, kurz SM-SR) verwaltet wird. Eine eUICC-gesteuerte Sicherheitsdomäne, ECASD, kann ebenfalls enthalten, die durch einen Zertifikatsherausgebers auf der eUICC 1 verwaltet wird. Eine Dateistruktur eines Profils wird ebenfalls durch den Server 40 (beispielsweise einem Subscription Manager Data Preparation, kurz SM-DP) verwaltet.

Im System gemäß der Figuren 1 und 3 wird eine OTA-Kommunikation vom Server 40 übernommen. Der Server 40 verwendet beispielsweise SMS, CAT_TP oder HTTPS für die Kommunikation mit der eUICC 1, so wie es im Standard ETSI TS 102 227 beschrieben ist. Bei Verwendung von HTTPS unterstützen Server 40 und eUICC 1 eine Domain-Name-Auflösung, um eine IP-Adresse des Server 40 auflösen zu können. In Long-Term-Evolution-Netzen beispielsweise unterstützt das System auch Kurznachrichten (=Short-Message-Service, SMS). Der Server 40 ist frei in der Wahl des Übertragungsprotokolls entsprechend der Fähigkeiten der eUICC 1 und des Geräts 2. Die eUICC 1 unterstützt den Versand von sicheren Datenpaketen über SMS gemäß 3GPP TS 31.115.

Fig. 5 zeigt ein Ausführungsbeispiel eines Ablaufdiagrams 200 eines erfindungsgemäßen Verfahrens in einem Gerät 2. Im Schritt 201 wird eine erste Datenverbindung 5 zwischen dem Server 40 und dem Gerät 2 aufgebaut. Im Schritt 202 empfängt das Gerät 2 eine Anfrage von der eUICC 1. Im optionalen Schritt 203 wird eine DNS-IP-Adresse am Kommunikationsnetz 4 abgefragt. Zudem wird optional auch der aktuelle APN des Kommunikationsnetzes 4 abgefragt. Im Schritt 204 werden die Verbindungsparameter an die eUICC gesendet. Die folgenden Verbindungsparameter werden dabei übertragen: Status "aktiv"; IP-Protokoll-Version IPv6; APN "www.vodafone.de" und DNS-Server-IP Adresse "xyz". Diese Verbindungsparameter werden im Rahmen einer oder mehrerer APDUs an die eUICC 1 übertragen. Im Schritt 205 wird ein Kommando, beispielsweise zumindest ein APDU-Kommando "Open Channel", empfangen. Dieses Kommando beinhaltet die zum Aufbau einer zweiten Datenverbindung 6 zu verwendenden Verbindungsparameter. Diese Verbindungsparameter sind identisch zu den im Schritt 204 gesendeten Verbindungsparameter und lauten beispielsweise: IP-Protokoll-Version IPv6; APN "www.vodafone.de" und DNS-Server-IP Adresse "xyz". Im Schritt 206 wird sodann eine zweite Datenverbindung 6 zum Server 40 vom Gerät 2 aufgebaut.

Im Rahmen der Erfindung können alle beschriebenen und/oder gezeichneten und/oder beanspruchten Elemente beliebig miteinander kombiniert werden.

### BEZUGSZEICHENLISTE

- 1: Teilnehmeridentitätsmodul, eUICC
11 Übertragungskommando, APDU
12 Card Application Toolkit, CAT
13 Applet
15 Betriebssystem
16 Java Laufzeitumgebung, JCRE
17 Nichtflüchtiger Speicher
18 RAM
19 CPU
- 2: Gerät
21a,b Steuereinheit, ECU
24 Applikationsschicht
24a, 24b Applikation
- 3: Modem
31 Umsetzung
34 Applikationsschicht
34a, 34b Applikation
- 4: Kommunikationsnetz, Mobilfunk-Server, Mobile Network Operator, MNO
40 Server (extern oder intern)
41 Gateway, APN
- 5: Kommunikationsverbindung zwischen Gerät und Server, erste Datenverbindung
- 6: Kommunikationsverbindung zwischen eUICC und Server, zweite Datenverbindung
- 7: Kommunikationsverbindung zwischen Applikationsschicht (Gerät) und Modem
- 8: Kommunikationsverbindung innerhalb des Modems
- 101-104: Verfahrensschritte im Teilnehmeridentitätsmodul, eUICC
- 201-206: Verfahrensschritte im Gerät

## Patentansprüche

1. Ein Verfahren (100) zum Aufbau einer zweiten Datenverbindung (6) über ein Kommunikationsnetz (4) zwischen einem Teilnehmeridentitätsmodul (1) und einem Server, wobei in dem Teilnehmeridentitätsmodul (1) Teilnehmeridentitätsdaten gespeichert sind, um einen Teilnehmer in dem Kommunikationsnetz (4) zu identifizieren und für das Nutzen von Diensten zu authentifizieren, wobei das Teilnehmeridentitätsmodul (1) die zweite Datenverbindung (6) mittels eines Geräts (2) aufbaut,
wobei zwischen dem Gerät (2) und einem Server (40) zeitgleich bereits eine erste Datenverbindung (5) eingerichtet ist oder eingerichtet werden soll,
wobei die erste Datenverbindung (5) durch wenigstens einen Verbindungsparameter klassifiziert und/oder parametrisiert ist,
wobei in dem Teilnehmeridentitätsmodul (1) die folgenden Verfahrensschritte ablaufen:
- Empfangen (102), von dem Gerät (2), zumindest eines Verbindungsparameters betreffend die erste Datenverbindung (5) zwischen dem Gerät (2) und dem Server (40); und
- Senden (103) eines Kommandos an das Gerät (2) zum Aufbau der zweiten Datenverbindung (6) zu dem Server (40) oder einem anderen Sever, wobei das Kommando den empfangenen zumindest einen Verbindungsparameter umfasst, mit welchem die zweite Datenverbindung (6) zwischen dem Gerät (2) und dem Server (40) oder einem anderen Server aufzubauen ist.

2. Das Verfahren (100) nach Anspruch 1, wobei der empfangene Verbindungsparameter eine Information über einen Zustand der ersten Datenverbindung (5) ist, wobei der Zustand der ersten Datenverbindung (5) aktiv oder inaktiv ist.

3. Das Verfahren (100) nach Anspruch 1 oder 2, wobei der Verbindungsparameter eine Information über eine Protokoll-Version der ersten Datenverbindung (5) ist und wobei das Teilnehmeridentitätsmodul (1) den Aufbau der zweiten Datenverbindung (6) mit der gleichen Protokoll-Version durch das Senden (103) des Kommandos anzeigt.

4. Das Verfahren (100) nach einem der vorhergehenden Ansprüche, wobei der Verbindungsparameter eine Domain-Name-System-Server-Adresse ist.

5. Das Verfahren (100) nach einem der vorhergehenden Ansprüche, wobei der Verbindungsparameter ein Zugangspunktes der ersten Datenverbindung (5) ist.

6. Das Verfahren (100) nach einem der vorhergehenden Ansprüche, wobei vor dem Empfangen-Schritt (102) der zumindest eine Verbindungsparameter am Kommunikationsnetz (4) von dem Gerät (2) abgefragt wird.

7. Das Verfahren (100) nach einem der vorhergehenden Ansprüche, wobei der empfangene zumindest eine Verbindungsparameter in einer Sicherheits-Domäne des Teilnehmeridentitätsmoduls (1) abgelegt wird, auf das vor dem Senden-Schritt (103) zugegriffen werden darf.

8. Das Verfahren (100) nach einem der vorhergehenden Ansprüche, wobei der empfangene zumindest eine Verbindungsparameter über ein Applet (13) des Teilnehmeridentitätsmoduls (1) an ein Betriebssystem (15) des Teilnehmeridentitätsmodul (1) übermittelt wird.

9. Das Verfahren (100) nach einem der vorhergehenden Ansprüche, wobei der zumindest eine Verbindungsparameter in periodischen Zeitabständen oder ereignisgesteuert aktualisiert wird.

10. Ein Verfahren (200) zum Bereitstellen von Verbindungsparametern für ein Teilnehmeridentitätsmodul (1), bevorzugt eine eUICC, durch ein Gerät (2), wobei in dem Teilnehmeridentitätsmodul (1) Teilnehmeridentitätsdaten gespeichert sind, um einen Teilnehmer in dem Kommunikationsnetz (4) zu identifizieren und für das Nutzen von Diensten zu authentifizieren, wobei das Teilnehmeridentitätsmodul (2) eine zweite Datenverbindung (6) gemäß einem der vorhergehenden Ansprüche aufbaut, wobei die erste Datenverbindung (5) durch wenigstens einen Verbindungsparameter klassifiziert und/oder parametrisiert ist, wobei dazu im Gerät (2) die folgenden Schritte ablaufen:
- Empfangen (202), von dem Teilnehmeridentitätsmodul (1), einer Verbindungsparameter-Anfrage;
- Senden (204), an das Teilnehmeridentitätsmodul (1), zumindest eines Verbindungsparameters betreffend eine erste Datenverbindung (5) zwischen dem Gerät (2) und einem Server (40), die zeitgleich eingerichtet ist oder eingerichtet werden soll;
- Empfangen (205), von dem Teilnehmeridentitätsmodul (1), eines Kommandos zum Aufbau einer zweiten Datenverbindung (6) zu dem Server (40) oder einem anderen Server, wobei das Kommando den gesendeten zumindest einen Verbindungsparameter umfasst; und
- Aufbauen (206) der zweiten Datenverbindung (6) zu dem Server (40) oder einem anderen Server unter Verwendung des zumindest einen Verbindungsparameters.

11. Das Verfahren (200) nach Anspruch 10, wobei vor dem Senden-Schritt (204), beim Server (40) oder dem Kommunikationsnetz (4) eine Domain-Name-Server-Adresse und/oder eine Adresse eines zu verwendeten Zugangspunktes abgefragt wird.

12. Ein Teilnehmeridentitätsmodul (1), eingerichtet für den Aufbau einer zweiten Datenverbindung (6) mit einem Server (40) gemäß einem der vorhergehenden Ansprüche 1 bis 9, wobei in dem Teilnehmeridentitätsmodul (1) Teilnehmeridentitätsdaten gespeichert sind, um einen Teilnehmer in dem Kommunikationsnetz (4) zu identifizieren und für das Nutzen von Diensten zu authentifizieren, wobei das Teilnehmeridentitätsmodul (1) die zweite Datenverbindung (6) mittels eines Geräts (2) aufbaut, wobei das Teilnehmeridentitätsmodul (1) umfasst:
- eine Schnittstelle eingerichtet zum Senden (101) eines Kommandos an das Gerät (2), um zumindest einen Verbindungsparameter betreffend eine erste Datenverbindung (5) zwischen dem Gerät (2) und einem Server (40), die zeitgleich bereits eingerichtet ist oder eingerichtet werden soll, abzufragen und zum Empfangen (102) des zumindest einen Verbindungsparameters von dem Gerät (2); wobei der Verbindungsparameter die erste Datenverbindung (5) klassifiziert und/oder parametrisiert;
- einen Datenspeicher (17), eingerichtet zum Ablegen des empfangenen zumindest einen Verbindungsparameters;
- ein Betriebssystem (15), eingerichtet zum Konfigurieren eines Kommandos für den Aufbau einer zweiten Datenverbindung (6) zu dem Server (40) oder einem anderen Server, wobei das Kommando an das Gerät (2) gesendet wird und den empfangenen zumindest einen Verbindungsparameters umfasst mit welchem die zweite Datenverbindung (6) zwischen dem Gerät (2) und dem oder einem anderen Server (40) aufzubauen ist.

13. Das Teilnehmeridentitätsmodul (1) gemäß Anspruch 12, wobei die Kommandos APDU-Kommandos sind.

14. Das Teilnehmeridentitätsmodul (1) gemäß Anspruch 12 oder 13, weiter umfassend:
- ein Applet (13), ausführbar abgelegt in dem Speicherbereich (17) und eingerichtet, den empfangenen zumindest einen Verbindungsparameter an das Betriebssystem (15) des Teilnehmeridentitätsmoduls (1) zu übermitteln.

15. Ein Computerprogramprodukt ausführbar installiert in einem Teilnehmeridentitätsmodul (1) und aufweisend Mittel zum Ausführen der Verfahrensschritte einer der Ansprüche 1 bis 9.

## Claims

1. Method (100) for setting up a second data connection (6) on a communication network (4) between a subscriber identity module (1) and a server,
wherein the subscriber identity module (1) stores subscriber identity data in order to identify a subscriber in the communication network (4) and to authenticate said subscriber for the use of services, wherein the subscriber identity module (1) sets up the second data connection (6) using a device (2),
wherein a first data connection (5) is already established or is intended to be established at the same time between the device (2) and a server (40),
wherein the first data connection (5) is classified and/or parameterized by at least one connection parameter,
wherein the following method steps take place in the subscriber identity module (1):
- receiving (102), from the device (2), at least one connection parameter concerning the first data connection (5) between the device (2) and the server (40); and
- transmitting (103) a command to the device (2) to set up the second data connection (6) to the server (40) or another server, wherein the command comprises the received at least one connection parameter using which the second data connection (6) is to be set up between the device (2) and the server (40) or another server.

2. Method (100) according to Claim 1, wherein the received connection parameter is an item of information about a state of the first data connection (5), wherein the state of the first data connection (5) is active or inactive.

3. Method (100) according to Claim 1 or 2, wherein the connection parameter is an item of information about a protocol version of the first data connection (5) and wherein the subscriber identity module (1) indicates the setup of the second data connection (6) with the same protocol version by transmitting (103) the command.

4. Method (100) according to one of the preceding claims, wherein the connection parameter is a domain name system server address.

5. Method (100) according to one of the preceding claims, wherein the connection parameter is an access point of the first data connection (5).

6. Method (100) according to one of the preceding claims, wherein, prior to the reception step (102), the at least one connection parameter is queried on the communication network (4) by the device (2).

7. Method (100) according to one of the preceding claims, wherein the received at least one connection parameter is stored in a security domain of the subscriber identity module (1) that is permitted to be accessed prior to the transmission step (103).

8. Method (100) according to one of the preceding claims, wherein the received at least one connection parameter is transmitted to an operating system (15) of the subscriber identity module (1) via an applet (13) of the subscriber identity module (1).

9. Method (100) according to one of the preceding claims, wherein the at least one connection parameter is updated at periodic time intervals or on an eventcontrolled basis.

10. Method (200) for providing connection parameters for a subscriber identity module (1), preferably an eUICC, using a device (2), wherein the subscriber identity module (1) stores subscriber identity data in order to identify a subscriber in the communication network (4) and to authenticate said subscriber for the use of services, wherein the subscriber identity module (2) sets up a second data connection (6) according to one of the preceding claims, wherein the first data connection (5) is classified and/or parameterized by at least one connection parameter, wherein, for this purpose, the following steps take place in the device (2):
- receiving (202) a connection parameter request from the subscriber identity module (1);
- transmitting (204), to the subscriber identity module (1), at least one connection parameter concerning a first data connection (5) between the device (2) and a server (40) that is established or is intended to be established at the same time;
- receiving (205), from the subscriber identity module (1), a command to set up a second data connection (6) to the server (40) or another server, wherein the command comprises the transmitted at least one connection parameter; and
- setting up (206) the second data connection (6) to the server (40) or another server using the at least one connection parameter.

11. Method (200) according to Claim 10, wherein, prior to the transmission step (204), a domain name server address and/or an address of an access point to be used is queried on the server (40) or the communication network (4).

12. Subscriber identity module (1), designed to set up a second data connection (6) with a server (40) according to one of preceding Claims 1 to 9, wherein the subscriber identity module (1) stores subscriber identity data in order to identify a subscriber in the communication network (4) and to authenticate said subscriber for the use of services, wherein the subscriber identity module (1) sets up the second data connection (6) using a device (2), wherein the subscriber identity module (1) comprises:
- an interface designed to transmit (101) a command to the device (2) in order to query at least one connection parameter concerning a first data connection (5) between the device (2) and a server (40) that is already established or is intended to be established at the same time, and to receive (102) the at least one connection parameter from the device (2); wherein the connection parameter specifies and/or parameterizes the first data connection (5);
- a data memory (17), designed to store the received at least one connection parameter;
- an operating system (15), designed to configure a command to set up a second data connection (6) to the server (40) or another server, wherein the command is transmitted to the device (2) and comprises the received at least one connection parameter using which the second data connection (6) is to be set up between the device (2) and the server or another server (40).

13. Subscriber identity module (1) according to Claim 12, wherein the commands are APDU commands.

14. Subscriber identity module (1) according to Claim 12 or 13, furthermore comprising:
- an applet (13), stored in executable fashion in the memory area (17) and designed to transmit the received at least one connection parameter to the operating system (15) of the subscriber identity module (1).

15. Computer program product installed in executable fashion in a subscriber identity module (1) and having means for carrying out the method steps from one of Claims 1 to 9.

## Revendications

1. Procédé (100) d'établissement d'une deuxième liaison de données (6) sur un réseau de communication (4) entre un module d'identité de périphérique (1) et un serveur,
des données d'identité de périphérique étant mémorisées dans le module d'identité de périphérique (1) afin d'identifier un périphérique dans le réseau de communication (4) et de l'authentifier pour utiliser des services,
le module d'identité de périphérique (1) établissant la deuxième liaison de données (6) à l'aide d'un appareil (2),
une première liaison de données (5) ayant déjà été établie ou devant être établie simultanément entre l'appareil (2) et un serveur (40),
la première liaison de données (5) étant classée et/ou paramétrée par au moins un paramètre de liaison,
les étapes de procédé suivantes se déroulant dans le module d'identité de périphérique (1) :
- recevoir (102), de l'appareil (2), au moins un paramètre de liaison relatif à la première liaison de données (5) entre l'appareil (2) et le serveur (40) ;
et
- envoyer (103) une commande à l'appareil (2) pour établir la deuxième liaison de données (6) avec le serveur (40) ou un autre serveur, la commande comprenant au moins un paramètre de liaison reçu avec lequel la deuxième liaison de données (6) doit être établie entre l'appareil (2) et le serveur (40) ou un autre serveur.

2. Procédé (100) selon la revendication 1, le paramètre de liaison reçu étant une information sur un état de la première liaison de données (5), l'état de la première liaison de données (5) étant actif ou inactif.

3. Procédé (100) selon la revendication 1 ou 2, le paramètre de liaison étant une information sur une version de protocole de la première liaison de données (5) et le module d'identité de périphérique (1) indiquant l'établissement de la deuxième liaison de données (6) avec la même version de protocole en envoyant (103) la commande.

4. Procédé (100) selon l'une des revendications précédentes, le paramètre de liaison étant une adresse de serveur de système de noms de domaine.

5. Procédé (100) selon l'une des revendications précédentes, le paramètre de liaison étant un point d'accès de la première liaison de données (5).

6. Procédé (100) selon l'une des revendications précédentes, l'au moins un paramètre de liaison sur le réseau de communication (4) étant interrogé par l'appareil (2) avant l'étape de réception (102).

7. Procédé (100) selon l'une des revendications précédentes, l'au moins un paramètre de liaison reçu étant stocké dans un domaine de sécurité du module d'identité de périphérique (1) accessible avant l'étape d'envoi (103).

8. Procédé (100) selon l'une des revendications précédentes, l'au moins un paramètre de liaison reçu étant transmis à un système d'exploitation (15) du module d'identité de périphérique (1) par le biais d'une applet (13) du module d'identité de périphérique (1) .

9. Procédé (100) selon l'une des revendications précédentes, l'au moins un paramètre de liaison étant actualisé à intervalles périodiques ou commandés par des événements.

10. Procédé (200) de fourniture de paramètres de liaison à un module d'identité de périphérique (1), de préférence un eUICC, par le biais d'un appareil (2), des données d'identité de périphérique étant mémorisées dans le module d'identité de périphérique (1) afin d'identifier un périphérique dans le réseau de communication (4) et de l'authentifier pour utiliser des services, le module d'identification de périphérique (2) établissant une deuxième liaison de données (6) selon l'une des revendications précédentes, la première liaison de données (5) étant classée et/ou paramétrée par au moins un paramètre de liaison, les étapes suivantes étant pour cela réalisées dans l'appareil (2) :
- recevoir (202) du module d'identité de périphérique (1) une requête de paramètre de liaison ;
- envoyer (204) au module d'identité de périphérique (1) au moins un paramètre de liaison relatif à une première liaison de données (5) entre l'appareil (2) et un serveur (40), établie ou à établir simultanément ;
- recevoir (205) du module d'identité de périphérique (1) une commande d'établissement d'une deuxième liaison de données (6) avec le serveur (40) ou un autre serveur, la commande comprenant l'au moins un paramètre de liaison envoyé ; et
- établir (206) la deuxième liaison de données (6) avec le serveur (40) ou un autre serveur à l'aide de l'au moins un paramètre de liaison.

11. Procédé (200) selon la revendication 10, une adresse de serveur de noms de domaine et/ou une adresse d'un point d'accès à utiliser étant interrogée au niveau du serveur (40) ou du réseau de communication (4) avant l'étape d'envoi (204).

12. Module d'identité de périphérique (1), conçu pour établir une deuxième liaison de données (6) avec un serveur (40) selon l'une des revendications précédentes 1 à 9, des données d'identité de périphérique étant stockées dans le module d'identité de périphérique (1) afin d'identifier un périphérique dans le réseau de communication (4) et de l'authentifier pour utiliser des services, le module d'identité de périphérique (1) établissant la deuxième liaison de données (6) à l'aide d'un appareil (2), le module d'identité de périphérique (1) comprenant :
- une interface conçue pour envoyer (101) une commande à l'appareil (2) afin d'interroger au moins un paramètre de liaison relatif à une première liaison de données (5) entre l'appareil (2) et un serveur (40), qui a déjà été établie ou qui doit être établie simultanément, et pour recevoir (102) l'au moins un paramètre de liaison de l'appareil (2) ; le paramètre de liaison classifiant et/ou paramétrant la première liaison de données (5) ;
- une mémoire de données (17), conçue pour stocker au moins un paramètre de liaison reçu ;
- un système d'exploitation (15) conçu pour configurer une commande d'établissement d'une deuxième liaison de données (6) avec le serveur (40) ou un autre serveur, la commande étant envoyée à l'appareil (2) et comprenant au moins un paramètre de liaison reçu avec lequel la deuxième liaison de données (6) entre l'appareil (2) et le serveur ou un autre serveur (40) doit être établie.

13. Module d'identité de périphérique (1) selon la revendication 12, les commandes étant des commandes APDU.

14. Module d'identité de périphérique (1) selon la revendication 12 ou 13, comprenant en outre : une applet (13), stockée de manière exécutable dans la zone de mémoire (17) et conçue pour transmettre l'au moins un paramètre de liaison reçu au système d'exploitation (15) du module d'identité de périphérique (1).

15. Produit de programme informatique installé de manière exécutable dans un module d'identité de périphérique (1) et comportant des moyens de réalisation des étapes de procédé de l'une des revendications 1 à 9.
